# EUROPEAN PATENT SPECIFICATION

(11) **EP 4 360 993 B1**
(45) Date of publication and mention of the grant of the patent: **31.12.2025**
(21) Application number: 23200503.3
(22) Date of filing: 28.09.2023
(51) Int. Cl.: B62D 1/183, B62D 1/187

(54) **A DRIVER'S CABIN OF A VEHICLE**
FAHRERKABINE EINES FAHRZEUGS
CABINE DE CONDUCTEUR D'UN VÉHICULE

(30) Priority: 29.09.2022 NL 2033177
(43) Date of publication of application: 01.05.2024
(73) Proprietor: DAF Trucks N.V., 5643 TW Eindhoven (NL)
(72) Inventor: KUIJPERS, Martinus Wilhelmina Paulus, 5643 TW Eindhoven (NL)
(74) Representative: V.O.

(56) References cited:
- WO-A1-2022/071803
- DE-A1- 102015 013 340
- DE-A1- 3 801 485
- JP-B2- 4 926 805

## Description

The invention relates to a driver's cabin of a vehicle, in particular a heavy goods vehicle, the driver's cabin comprising a cabin frame, a dashboard fixedly attached to the cabin frame, the dashboard comprising a dashboard recess, a steering wheel assembly at least partially positioned in the dashboard recess, said steering wheel assembly comprising a movable steering wheel column assembly, the movable steering wheel column assembly comprising a movable steering wheel column cover, the dashboard recess comprising an upper gap above the movable steering wheel column cover and a lower gap below the movable steering wheel column cover, the cabin further comprising a rotatable upper gap cover and a rotatable lower gap cover, the rotatable upper gap cover and the rotatable lower gap cover each having an upper edge and a lower edge, wherein the upper gap cover and the lower gap cover are connected with each other by means of at least two tension springs.

Such a driver's cabin is for example known from WO2022071803A1. In the known driver's cabin the movable steering wheel column assembly comprises a rotatable upper gap cover for covering the upper gap and a rotatable lower gap cover for covering the lower gap. Although by such upper gap cover and lower gap cover the upper gap and lower gap between the movable steering wheel column assembly and the dashboard are covered and closed satisfactorily it appears that after a prolonged time of use scratches occur on the surfaces of e.g. the dashboard along which the upper gap cover and/or lower gap cover slide during their rotatable motion. These scratches are the result of pollution, such as sand grains or other grain like material, that might be deposited on the mutually movable surfaces. It is an object of the invention to provide an alternative driver's cabin in which the occurrence of scratches on dashboard surfaces during the time of use is at least reduced.

According to the invention at least one of these objects is obtained by providing a driver's cabin of a vehicle, in particular a heavy goods vehicle, the driver's cabin comprising a cabin frame, a dashboard fixedly attached to the cabin frame, the dashboard comprising a dashboard recess, a steering wheel assembly at least partially positioned in the dashboard recess, said steering wheel assembly comprising a movable steering wheel column assembly, the movable steering wheel column assembly comprising a movable steering wheel column cover, the dashboard recess comprising an upper gap above the movable steering wheel column cover and a lower gap below the movable steering wheel column cover, the cabin further comprising a rotatable upper gap cover and a rotatable lower gap cover, the rotatable upper gap cover and the rotatable lower gap cover each having an upper edge and a lower edge, wherein the upper gap cover and the lower gap cover are connected with each other by means of at least two tension springs, characterized in that at least one of the upper edge and lower edge of the rotatable upper gap cover and/or the rotatable lower gap cover is provided with a brush comprising brush hairs arranged in brush hair bundles for covering the upper gap and/or lower gap, respectively. In this manner when sand (or other kinds of pollution) falls on the movable upper gap cover and lower gap cover, this sand will be swiped away without any scratches occurring to the surfaces of the movable upper gap cover and lower gap cover, the steering column cover or other surface of the dashboard since the sand is allowed to fall through the brush hair bundles into the respective gaps, without getting stuck in the interface between the mutually moving parts.

According to the invention the free length of the brush hairs is 3 - 6 mm, preferably 4 mm, the diameter of the brush hairs is between 0.1 and 0.2 mm, preferably 0.15 mm and the diameter of the brush hair bundles is between 2 and 3 mm, preferably 2.5 mm. As a result of these dimensions a smooth as possible sliding of the brush hairs over the respective surfaces is obtained, resulting in less annoying (scraping) noises while further preventing damage of the respective surfaces. On the other hand these dimensions provide a better appearance of the dashboard and the movable steering wheel column cover is achieved. Preferably the brush hairs are made of PA6. Since the steering wheel column assembly can be positioned in different steering positions, the brush will not always be positioned perpendicular to the surface of the respective gap cover. By using brush hairs having the dimensions indicated above and made of PA6 it is possible that the hairs can loaded sideways at an angle of up to 35 degrees without being permanently deformed.

Preferably the brush extends over the length of the respective upper edge or lower edge of the rotatable upper gap cover and/or the rotatable lower gap cover.

In a further embodiment of a driver's cabin according to the invention the brush is integrated with the respective gap cover.

In a still further embodiment of a driver's cabin according to the invention the at least two tension springs are arranged to pull the brush with a force in a range between 2.5 and 3.5 N against the respective gap cover. By using tension springs that are arranged to pull the brush with a force in a range between 2.5 and 3.5 N against the respective gap cover the gap can be rotated in a stable manner while the risk of deformation of the brush hairs and the risk of scratching of the surface of the respective gap coves is reduced.

The invention will be further explained with reference to the Figures, in which a non-limiting exemplary embodiment of a vehicle according to the invention is shown:
Fig. 1 schematically shows an embodiment in side view of a driver's cabin of a vehicle according to the invention;
Fig. 2 schematically shows the steering wheel assembly and the movable steering wheel column assembly of a driver's cabin as shown in Figure 1 further depicting parts of the dashboard;
Figs. 3 and 4 schematically show the upper gap cover provided with a brush; and
Fig. 5 schematically shows the brush of Figures 3 and 4 in more detail comprising brush hairs arranged in brush hair bundles.

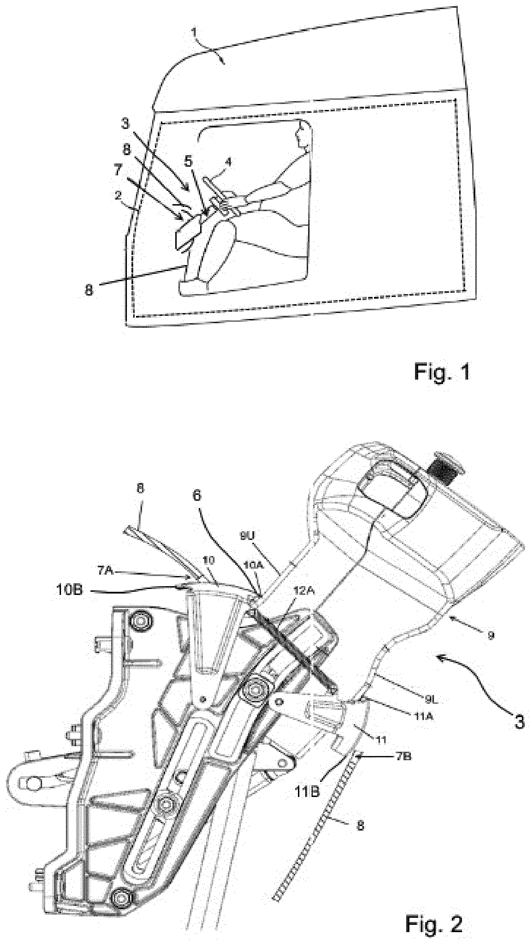

In Fig. 1 an example of an embodiment of a driver's cabin 1 of a heavy goods vehicle according to the invention is schematically shown in side view. The driver's cabin 1 comprises a cabin frame 2, a steering wheel assembly 3 for a steering wheel 4. The steering wheel assembly 4 comprises a movable steering wheel column assembly 5. The steering wheel assembly 3 is positioned in a dashboard recess 7 of a dashboard 8 of the driver's cabin 1, which dashboard 8 is fixedly attached to the cabin frame 2.

Figure 2 schematically shows in side view a pictorial view of the steering wheel assembly 3, the dashboard 8 together with a movable steering wheel column cover 9 of the driver's cabin 1 as shown in Figure 1. The dashboard recess 7 comprises an upper gap 7A above the movable steering wheel column cover 9 and a lower gap 7B below the movable steering wheel column cover 9, which gaps 7A, 7B are covered by means of a rotatable upper gap cover 10 for covering the upper gap 7A, and a rotatable lower gap cover 11 for covering the lower gap 7B.

The upper gap cover 10 has an upper edge 10B and a lower edge 10A which latter is in engagement with an upper surface 9U of the movable steering wheel column cover 9. Analogously the lower gap cover 11 has an upper edge 11A in engagement with a lower surface 9L of the movable steering wheel column cover 9 and a lower edge 11B. According to the invention at least one of the upper edge 10B, 11A and lower edge 10A, 11B of the rotatable upper gap cover 10 and/or the rotatable lower gap cover 11 is provided with a brush 6 comprising brush hairs arranged in brush hair bundles 12 for covering the upper gap 7A and/or lower gap 7B, respectively. As shown in Figure 1 the upper gap cover 10 and the lower gap cover 10 are connected with each other by means of at least two tension springs 12A, which are arranged to pull the brush with a force in a range between 2.5 and 3.5 N against the respective gap cover.

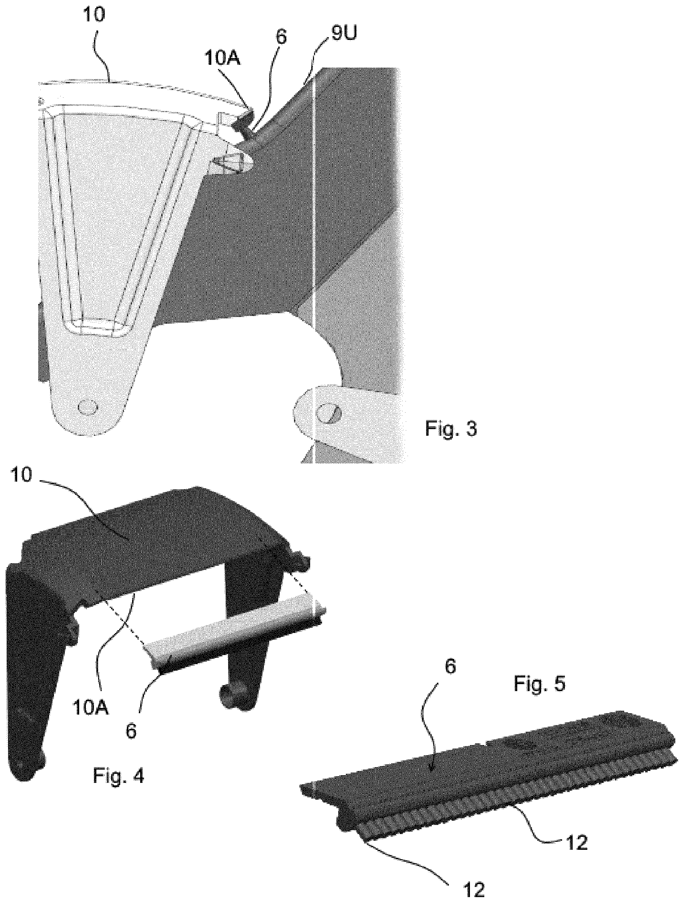

The brush 6 will be described in more detail in Figures 3, 4 and 5 with regard to a brush 6 provided at the lower edge 10A of the rotatable upper gap cover 10. It will be clear that a similar brush can be arranged at the other edges of the gap covers.

As indicated in Figures 3 and 4 the brush 6 extends over the length of the lower edge 10A of the rotatable upper gap cover 10 and ensures that sand (or other kinds of pollution) falling on the movable upper gap cover 10 and the upper surface 9U of the movable steering wheel column cover will be swiped away without any scratches occurring on the respective surfaces since the sand is allowed to fall through the brush hair bundles 12 into the respective gap, without getting stuck in the interface between the mutually moving parts. In Figure 5 the brush 6 comprising a number of juxtaposed brush hair bundles 12 preferably having a diameter of 2.5 mm is shown in more detail, wherein the brush hairs are made of PA6 and the free length of the brush hairs in the brush hair bundles 12 preferably is 4 mm, while the diameter of the brush hairs preferably is 0.15 mm. The dimensions in different embodiments can deviate from the dimensions given above, however it appears that in embodiments wherein the free length of the brush hairs is between 3 mm and 6 mm, the diameter of the brush hairs is between 0.1 and 0.2 mm and the diameter of the brush hair bundles is between 2 and 3 mm the brush hairs smoothly slide over the respective surfaces, resulting in less annoying (scraping) noises while further preventing damage of the respective surfaces. On the other hand these preferred dimensions provide a better appearance of the dashboard and the movable steering wheel column cover is achieved.

Although in Figures 4 and 5 the brush 6 is indicated as a separate component which can be attached to the respective gap cover, the brush can in other not shown embodiments be integrated with the respective gap cover.

## Claims

1. A driver's cabin (1) of a vehicle, in particular a heavy goods vehicle, the driver's cabin (1) comprising a cabin frame (2), a dashboard (8) fixedly attached to the cabin frame (2), the dashboard (8) comprising a dashboard recess (7), a steering wheel assembly (3) at least partially positioned in the dashboard recess (7), said steering wheel assembly (3) comprising a movable steering wheel column assembly (5), the movable steering wheel column assembly (5) comprising a movable steering wheel column cover (9), the dashboard recess (7) comprising an upper gap (7A) above the movable steering wheel column cover (9) and a lower gap (7B) below the movable steering wheel column cover (9), the cabin (1) further comprising a rotatable upper gap cover (10) and a rotatable lower gap cover (11), the rotatable upper gap cover (10) and the rotatable lower gap cover (11) each having an upper edge (10B, 11A) and a lower edge (10A, 11B),
wherein the upper gap cover (10) and the lower gap cover (11) are connected with each other by means of at least two tension springs (12A),
**characterized in that** at least one of the upper edge (10B, 11A) and lower edge (10A, 11B) of the rotatable upper gap cover (10) and/or the rotatable lower gap cover (11) is provided with a brush (6) comprising brush hairs arranged in brush hair bundles (12) for covering the upper gap (7A) and/or lower gap (7B), respectively, and wherein the free length of the brush hairs is 3 - 6 mm, preferably 4 mm, the diameter of the brush hairs is between 0.1 and 0.2 mm, preferably 0.15 mm and the diameter of the brush hair bundles (12) is between 2 and 3 mm, preferably 2.5mm.

2. The driver's cabin (1) of a vehicle according to claim 1, wherein the brush hairs are made of PA6.

3. The driver's cabin (1) of a vehicle according to claim 1 or 2, wherein the brush (6) extends over the length of the respective upper edge (10B, 11A) or lower edge (10A, 11B) of the rotatable upper gap cover (10) and/or the rotatable lower gap cover (11).

4. The driver's cabin (1) of a vehicle according to any one of the preceding claims, wherein the brush (6) is integrated with the respective gap cover (10, 11).

5. The driver's cabin (1) of a vehicle according to any one of the preceding claims, wherein the at least two tension springs (12A) are arranged to pull the brush (6) with a force in a range between 2.5 and 3.5 N against the respective gap cover (10, 11).

## Patentansprüche

1. Fahrerkabine (1) eines Fahrzeugs, insbesondere eines Lastkraftwagens, wobei die Fahrerkabine (1) einen Kabinenrahmen (2), ein fest mit dem Kabinenrahmen (2) verbundenes Armaturenbrett (8), wobei das Armaturenbrett (8) eine Armaturenbrettaussparung (7) umfasst, eine zumindest teilweise in der Armaturenbrettaussparung (7) angeordnete Lenkradbaugruppe (3), wobei die Lenkradbaugruppe (3) eine bewegliche Lenkradsäulenbaugruppe (5) umfasst, wobei die bewegliche Lenkradsäulenbaugruppe (5) eine bewegliche Lenkradsäulenabdeckung (9) umfasst, wobei die Armaturenbrettaussparung (7) einen oberen Spalt (7A) oberhalb der beweglichen Lenkradsäulenabdeckung (9) und einen unteren Spalt (7B) unterhalb der beweglichen Lenkradsäulenabdeckung (9) umfasst, wobei die Kabine (1) ferner eine drehbare obere Spaltabdeckung (10) und eine drehbare untere Spaltabdeckung (11) umfasst, wobei die drehbare obere Spaltabdeckung (10) und die drehbare untere Spaltabdeckung (11) jeweils eine Oberkante (10B, 11A) und eine Unterkante (10A, 11B) aufweisen, wobei die obere Spaltabdeckung (10) und die untere Spaltabdeckung (11) mittels mindestens zweier Zugfedern (12A) miteinander verbunden sind,
**dadurch gekennzeichnet, dass** mindestens eine der Oberkante (10B, 11A) und der Unterkante (10A, 11B) der drehbaren oberen Spaltabdeckung (10) und/oder der drehbaren unteren Spaltabdeckung (11) mit einer Bürste (6) versehen ist, die in Bürstenhaarbündeln (12) angeordnete Bürstenhaare zum Abdecken des oberen Spalts (7A) und/oder des unteren Spalt (7B) umfasst, und wobei die freie Länge der Bürstenhaare 3 bis 6 mm, vorzugsweise 4 mm, beträgt, der Durchmesser der Bürstenhaare zwischen 0,1 und 0,2 mm, vorzugsweise 0,15 mm, beträgt und der Durchmesser der Bürstenhaarbündel (12) zwischen 2 und 3 mm, vorzugsweise 2,5 mm, beträgt.

2. Fahrerkabine (1) eines Fahrzeugs nach Anspruch 1, wobei die Bürstenhaare aus PA6 hergestellt sind.

3. Fahrerkabine (1) eines Fahrzeugs nach Anspruch 1 oder 2, wobei sich die Bürste (6) über die Länge der jeweiligen Oberkante (10B, 11A) oder Unterkante (10A, 11B) der drehbaren oberen Spaltabdeckung (10) und/oder der drehbaren unteren Spaltabdeckung (11) erstreckt.

4. Fahrerkabine (1) eines Fahrzeugs nach einem der vorhergehenden Ansprüche, wobei die Bürste (6) in die jeweilige Spaltabdeckung (10, 11) integriert ist.

5. Fahrerkabine (1) eines Fahrzeugs nach einem der vorhergehenden Ansprüche, wobei die mindestens zwei Zugfedern (12A) so angeordnet sind, dass sie die Bürste (6) mit einer Kraft in einem Bereich zwischen 2,5 und 3,5 N gegen die jeweilige Spaltabdeckung (10, 11) ziehen.

## Revendications

1. Cabine de conducteur (1) d'un véhicule, en particulier d'un poids lourd, la cabine de conducteur (1) comprenant un cadre de cabine (2), un tableau de bord (8) fixé, de manière fixe, au cadre de cabine (2), le tableau de bord (8) comprenant un évidement de tableau de bord (7), un ensemble de volant (3) au moins partiellement positionné dans l'évidement de tableau de bord (7), ledit ensemble de volant (3) comprenant un ensemble de colonne de volant mobile (5), l'ensemble de colonne de volant mobile (5) comprenant une housse de colonne de volant mobile (9), l'évidement de tableau de bord (7) comprenant un interstice supérieur (7A) au-dessus de la housse de colonne de volant mobile (9) et un interstice inférieur (7B) au-dessous de la housse de colonne de volant mobile (9), la cabine (1) comprenant en outre un couvercle d'interstice supérieur rotatif (10) et un couvercle d'interstice inférieur rotatif (11), le couvercle d'interstice supérieur rotatif (10) et le couvercle d'interstice inférieur rotatif (11) ayant chacun un bord supérieur (10B, 11A) et un bord inférieur (10A, 11B), dans laquelle le couvercle d'interstice supérieur (10) et le couvercle d'interstice inférieur (11) sont raccordés entre eux au moyen d'au moins deux ressorts de tension (12A), **caractérisée en ce qu'**au moins l'un parmi le bord supérieur (10B, 11A) et le bord inférieur (10A, 11B) du couvercle d'interstice supérieur rotatif (10) et/ou du couvercle d'interstice inférieur rotatif (11) est prévu avec une brosse (6) comprenant des poils de brosse agencés en touffes de poils de brosse (12) pour recouvrir respectivement l'interstice supérieur (7A) et/ou l'interstice inférieur (7B), et dans laquelle la longueur libre des poils de brosse est de 3 à 6 mm, de préférence 4 mm, le diamètre des poils de brosses est compris entre 0,1 et 0,2 mm, de préférence 0,15 mm et le diamètre des touffes de poils de brosse (12) est compris entre 2 et 3 mm, de préférence 2,5 mm.

2. Cabine de conducteur (1) d'un véhicule selon la revendication 1, dans laquelle les poils de brosse sont réalisés à partir de PA6.

3. Cabine de conducteur (1) d'un véhicule selon la revendication 1 ou 2, dans laquelle la brosse (6) s'étend sur la longueur du bord supérieur (10B, 11A) ou du bord inférieur (10A, 11B) respectif du couvercle d'interstice supérieur rotatif (10) et/ou du couvercle d'interstice inférieur rotatif (11).

4. Cabine de conducteur (1) d'un véhicule selon l'une quelconque des revendications précédentes, dans lequel la brosse (6) est intégrée avec le couvercle d'interstice (10, 11) respectif.

5. Cabine de conducteur (1) d'un véhicule selon l'une quelconque des revendications précédentes, dans laquelle les au moins deux ressorts de tension (12A) sont agencés pour tirer la brosse (6) avec une force dans une plage comprise entre 2,5 et 3,5 N contre le couvercle d'interstice (10, 11) respectif.
